(19) Europäisches Patentamt
European Patent Office
Office européen des brevets

(11) EP 4 239 360 A1

(12) EUROPEAN PATENT APPLICATION

(43) Date of publication:
06.09.2023 Bulletin 2023/36

(21) Application number: 23159278.3

(22) Date of filing: 01.03.2023

(51) International Patent Classification (IPC):
G01S 5/00 (2006.01)      G01S 5/02 (2010.01)
G01S 5/14 (2006.01)

(52) Cooperative Patent Classification (CPC):
G01S 5/0072; G01S 5/0081; G01S 5/021;
G01S 5/02213; G01S 5/14; G01S 5/02216

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.03.2022 EP 22159743

(71) Applicant: Nokia Technologies Oy
02610 Espoo (FI)

(72) Inventors:
• Hviid, Jan Torst
9270 Klarup (DK)

• Kiilerich Pratas, Nuno Manuel
9260 Gistrup (DK)
• Vejlgaard, Benny
9260 Gistrup (DK)
• Harrebek, Johannes
9000 Aalborg (DK)
• Barbu, Oana-Elena
9000 Aalborg (DK)
• Keshavamurthy, Prajwal
81241 Munich (DE)

(74) Representative: Nokia EPO representatives
Nokia Technologies Oy
Karakaari 7
02610 Espoo (FI)

(54) TIMING COMPENSATION

(57) Example embodiments relate to an apparatus, method and computer program for timing compensation, for example timing compensation in relation to timing information provided by one or more positioning reference units (PRUs). An example method may involve providing data representing a timing error associated with a first position reference unit located at a first known position, with respect to a second position reference unit located at a second known position. The method may also comprise modifying timing information received from the first position reference unit, the modifying being based on at least the first timing error.

FIG. 1

EP 4 239 360 A1

**Description**

**Field**

Example embodiments relate to an apparatus, method and computer program for timing compensation, for example timing compensation in relation to timing information provided by one or more positioning reference units (PRUs).

**Background**

In radio systems, it may be important to determine the geographic position (hereafter "position") of a target device that may change position. For example, the target device may be a user equipment (UE) such as a mobile telephone, smartphone or even a vehicle. For example, knowing the position of a UE may be useful for optimization of radio resources, provision of location-based services, guidance and/or alert generation. The 3rd Generation Partnership Project (3GPP) has developed various standards and proposals relating to positioning of target devices via various methods based on, for example, fourth and fifth generation (4G and 5G) radio access technologies (RATs) and also future RAT technologies. Some positioning techniques rely on the target device communicating with positioning reference units (PRUs), e.g. RAT base stations (eNodeBs or gNodeBs) having respective known and fixed positions. The position of the target device may be determined based on the range of the UE from at least three of the PRUs using multilateration methods.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for: providing data representing a timing error associated with a first position reference unit located at a first known position, with respect to a second position reference unit located at a second known position; and modifying timing information received from the first position reference unit, the modifying being based on at least the first timing error.

The modifying means may be configured to subtract at least the timing error from the timing information so as to compensate for the timing error.

The timing information may be received from the first position reference unit, by or via the second position reference unit, using one or more sidelinks.

The timing information may be indicative of, or usable to determine, a range between the first position reference unit and a target device remote from the first and second position reference units.

The timing information may represent a receive timestamp of a reference signal transmitted by the target device.

The reference signal may be a sounding reference signal (SRS) or positioning reference signal (PRS).

The timing information may be received from the first position reference unit in response to a positioning request signal transmitted to the target device.

The providing means may be configured to compute a round-trip-time (RTT) between transmitting a paging signal from the second position reference unit to the first position reference unit and receiving an acknowledgment signal at the second position reference unit from the first position reference unit, the timing error being based on the RTT.

The timing error may be approximately half of the computed RTT.

The apparatus may further comprise means for re-computing and updating the timing error at predetermined time intervals.

The apparatus may further comprise means for re-computing and updating the timing error responsive to receipt of a positioning request from a location management unit for locating a target device.

The apparatus may further comprise means for paging the first position reference unit using a synchronisation signal, receiving therefrom a triggering signal in the event that a computed timing or frequency offset exceeds a predetermined threshold, and for re-computing and updating the timing error responsive to receiving the triggering signal.

The apparatus may comprise the second position reference unit. The apparatus may further comprise means for storing the timing error locally at the second position reference unit.

The apparatus may further comprise means for: identifying a chain of position reference units connected in series, the chain comprising the first position reference unit connected in series to the second position reference unit and the second position reference unit connected in series to a third position reference unit; and computing a cumulative timing error based on the timing error associated with the first position reference unit with respect to the second position reference unit, and a timing error associated with the second position reference unit with respect to the third position reference unit, wherein the modifying means is configured to modify the timing information received from the first position reference unit based on the cumulative timing error. The apparatus may comprise the location management unit or a base station connected to the first position reference unit.

According to a second aspect, there is described a method comprising: providing data representing a timing error associated with a first position reference unit located at a first known position, with respect to a second position reference unit located at a second known position; and modifying timing information received from the first position reference unit, the modifying being based on at least the first timing error.

The modifying may comprise subtract at least the timing error from the timing information so as to compensate for the timing error.

The timing information may be received from the first position reference unit, by or via the second position reference unit, using one or more sidelinks.

The timing information may be indicative of, or usable to determine, a range between the first position reference unit and a target device remote from the first and second position reference units.

The timing information may represent a receive timestamp of a reference signal transmitted by the target device.

The reference signal may be a sounding reference signal (SRS) or positioning reference signal (PRS).

The timing information may be received from the first position reference unit in response to a positioning request signal transmitted to the target device.

A round-trip-time (RTT) between transmitting a paging signal from the second position reference unit to the first position reference unit and receiving an acknowledgment signal at the second position reference unit from the first position reference unit may be computed, the timing error being based on the RTT.

The timing error may be approximately half of the computed RTT.

The method may further comprise re-computing and updating the timing error at predetermined time intervals.

The method may further comprise re-computing and updating the timing error responsive to receipt of a positioning request from a location management unit for locating a target device.

The method may further comprise paging the first position reference unit using a synchronisation signal, receiving therefrom a triggering signal in the event that a computed timing or frequency offset exceeds a predetermined threshold, and for re-computing and updating the timing error responsive to receiving the triggering signal.

The method may be performed by the second position reference unit. The method may further comprise storing the timing error locally at the second position reference unit.

The method may further comprise: identifying a chain of position reference units connected in series, the chain comprising the first position reference unit connected in series to the second position reference unit and the second position reference unit connected in series to a third position reference unit; and computing a cumulative timing error based on the timing error associated with the first position reference unit with respect to the second position reference unit, and a timing error associated with the second position reference unit with respect to the third position reference unit, wherein modifying comprises modifying the timing information received from the first position reference unit based on the cumulative timing error. The method may be performed by the location management unit or a base station connected to the first position reference unit.

According to a third aspect, there is provided a computer program product comprising a set of instructions which, when executed on an apparatus, is configured to cause the apparatus to carry out the method of: providing data representing a timing error associated with a first position reference unit located at a first known position, with respect to a second position reference unit located at a second known position; and modifying timing information received from the first position reference unit, the modifying being based on at least the first timing error.

According to a fourth aspect, there is provided a non-transitory computer readable medium comprising program instructions stored thereon for performing a method, comprising: providing data representing a timing error associated with a first position reference unit located at a first known position, with respect to a second position reference unit located at a second known position; and modifying timing information received from the first position reference unit, the modifying being based on at least the first timing error.

According to a fifth aspect, there is provided an apparatus comprising: at least one processor; and at least one memory including computer program code which, when executed by the at least one processor, causes the apparatus: providing data representing a timing error associated with a first position reference unit located at a first known position, with respect to a second position reference unit located at a second known position; and modifying timing information received from the first position reference unit, the modifying being based on at least the first timing error.

## Brief Description of Drawings

Example embodiments will now be described by way of non-limiting example, with reference to the accompanying drawings, in which:

FIG. 1 is a schematic view of a scenario in which a target device may be located using a network of positioning reference units according to some example embodiments;

FIG. 2 is a flow diagram showing operations that may be performed according to some example embodiments;

FIG. 3 is a sequence diagram indicating how timing errors may be computed according to some example embodiments;

FIG. 4 is a sequence diagram indicating in more detail how timing errors may be computed according to some example embodiments;

FIG. 5A is a sequence diagram indicating how the position of the FIG. 1 target device may be performed according to some example embodiments;

FIG. 5B is a sequence diagram indicating other signalling usable to determine the position of the FIG. 1 target device;

FIG. 6 is a schematic view of another scenario in which a target device may be located using a different network of positioning reference units according to some example embodiments;

FIG. 7 is a sequence diagram indicating how timing errors may be re-calculated according to some example embodiments;

FIG. 8 is an apparatus which may be configured to perform operations according to some example embodiments; and

FIG. 9 is a non-transitory medium which may store computer-readable code which, when executed, may perform operations according to some example embodiments.

## Detailed Description

Example embodiments relate to, inter alia, an apparatus, method and computer program for timing compensation, for example timing compensation in relation to timing information provided by one or more positioning reference units (PRUs) whereby the timing information may be processed to determine, with other timing information, a position of a target device.

The timing information may be indicative of, or usable to determine, a range or distance between a particular PRU and a target device which is remote from the particular PRU. For example, the timing information may represent a receive timestamp of a reference signal when received by the particular PRU from the target device.

A target device may be any communications device that may change its position over time. The target device may, for example, be a user equipment (UE). A UE may, for example, be a smartphone, laptop, tablet computer, wearable device or even a vehicle. A target device may even refer to a person if carrying or wearing a UE or other device having communications functionality.

Regarding vehicles, communications standards have been, and are being, developed relating specifically to vehicular communications, falling under the general term Vehicle-to-Everything (V2X).

Vehicles in this context may comprise any form of vehicle, such as cars, lorries, buses, trains, craft such as boats, ships and aircraft, unmanned aerial vehicles (UAVs). The term may also encompass autonomously-controlled entities in various forms. In some cases, a robot may be considered a type of vehicle.

Example embodiments are not limited to any particular form of UE, although vehicles may be described herein as particular examples.

A PRU may be any communications device having a known and usually fixed position and which can transmit data or signals representing timing information, such as a receive timestamp, for processing by one or more other nodes in a communications network. As noted above, the timing information may be indicative of, or usable to determine, a range or distance between a particular PRU and a target device which is remote from the PRU. For example, the other node may be a location management unit (LMU) of, or associated with, a radio access network (RAN). Alternatively, the other node may be a base station. The other node may be configured to determine the position of the target device using known multilateration methods based on the timing information which may be used to determine range. Usually, timing / range information from at least three PRUs may be required for accurate positioning. Range determination may be based on any known method, including, but not limited to, downlink time difference of arrival (DL-TDoA), uplink time difference of arrival (UL-TDoA), downlink angle of departure (DL-AoD), uplink angle of arrival (UL-AoA) or multi-cell round trip time (Multi-RTT), to give some examples.

A PRU may comprise, for example, a RAN base station such as an eNodeB (eNB) or gNodeB (gNB), another form of access point (AP) such as a WiFi AP, or even another UE if its position is fixed and known. A PRU may be considered a form of transmission / reception point (TRP) and the communications protocol used for receiving and transmitting data with other nodes in the network, including UEs and the LMU, will depend on the particular form of technology used.

Multilateration methods are well-known and so will not be described in significant detail in this disclosure.

As already mentioned, it may be important to determine the position of a target device that may change position over time. The 3rd Generation Partnership Project (3GPP) has developed various standards and proposals relating to positioning of target devices via various methods based on, for example, fourth and fifth generation (4G and 5G) radio access technologies (RATs) and also future technologies.

The use of so-called LTE sidelink connections, or "sidelinks" for direct communications between UEs without the need for signals to go via a base station are proposed in 3GPP release 12, with NR sidelinks mentioned in release 16 and, in relation to positioning, in 3GPP release 18. Sidelinks employ a so-called PC5 interface between pairs of UEs. Sidelinks may therefore enable UEs to provide relaying functionality from, for example, a first UE to a second UE and possibly from the second UE to a third UE and so on to a base station and other nodes of the core network. This may be useful in terms of extending range in particular scenarios where coverage is an issue. By use of sidelinks, UEs, such as PRUs to be mentioned below, may synchronise without the need for all to have a connection via a backbone connection to an accurate timing reference. Sidelink transmissions are organized in frames identified by the direct frame number (DFN). The DFN enables a UE to synchronize its radio frame transmissions according to a sidelink timing reference. UEs perform sidelink synchronization to have the same sidelink timing reference for sidelink communication among nearby UEs by synchronizing with a reference. There are four sources for synchronization reference: GNSS, NR Cell (gNB), EUTRAN Cell (eNB), SyncRef UE or UE's own internal clock. Here, SyncRef UE, e.g. a PRU receiving a timing reference from a satellite, is a UE acting as synchronization reference source that either extends the synchronization coverage of a synchronization source (e.g., GNSS, gNB/eNB or another SyncRef UE) to other PRUs via sidelinks or uses its own internal clock as the synchronization reference.

For example, according to some example embodiments, UEs may be used as PRUs in situations where it is not possible or is impractical to use base stations. Other advantages include power and cost savings and also flexibility given the relative ease involved in deploying and configuring UEs compared with base stations.

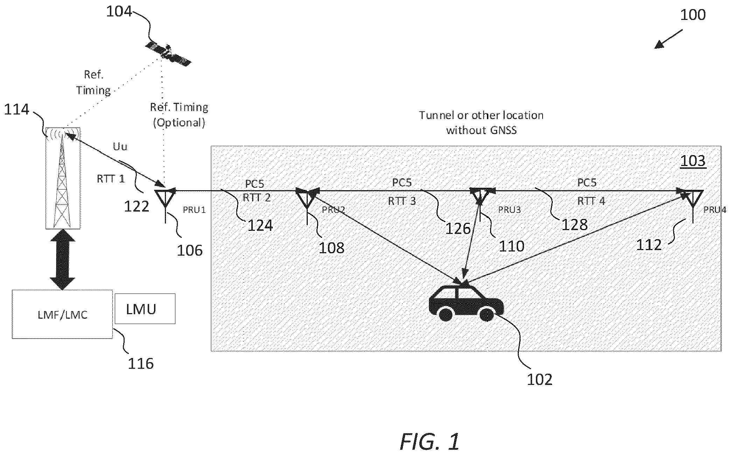

Referring to FIG. 1, an example scenario 100 is shown which employs the use of UEs as PRUs, and sidelinks between the UEs over respective PC5 interfaces.

A target device, namely a vehicle 102, is shown passing through a tunnel 103 and hence the vehicle is without direct or line-of-sight coverage to GNSS satellites (represented by reference numeral 104), or a base station 114, or possibly, a first PRU 106. The vehicle 102 may be fixed or may be moving in any direction through the tunnel 103.

In order to determine the position of the vehicle 102, a network of PRUs comprising the first PRU 106 and second to fourth PRUs 108, 110, 112 may be provided alongside a stretch of road extending into the tunnel 103. The first PRU 106 is outside of the tunnel 103 and the second to fourth PRUs 108, 110, 112 are inside of the tunnel.

The first to fourth PRUs 106, 108, 110, 112 may be UEs of any suitable type and may be positioned at respective fixed and known positions which are established at set-up time. The first to fourth PRUs 106, 108, 110, 112 may provide a network topology which, in this case, is a series chain; the first PRU has a line-of-sight (LoS) to the base station 114 in one direction and an LoS to the second PRU in the other direction. Similarly, the second PRU 108 has an LoS to the third PRU 110 and so on.

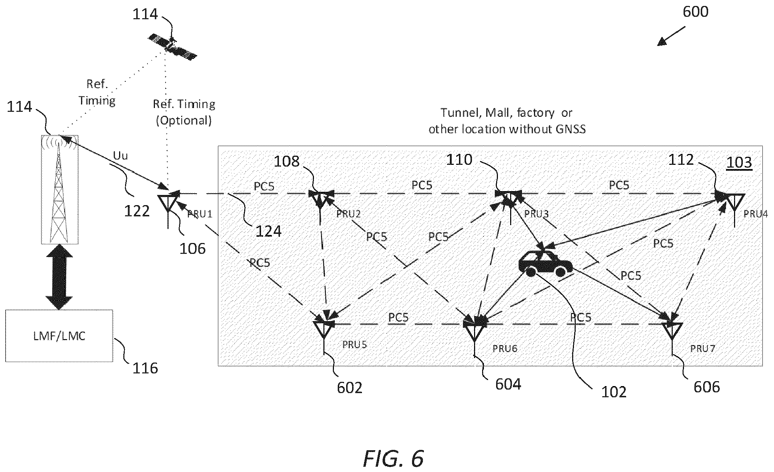

In other example embodiments, the network topology of PRUs may be more complex and may change with time, as will be explained with reference to FIG. 6 later on.

The first PRU 106 and/or the base station 114 can receive a reference time from, for example, the GNSS satellite 104 enabling it to provide the above-mentioned sidelink timing reference, e.g. local clock, which enables (e.g. time and frequency) synchronisation among the first to fourth PRUs 106, 108, 110, 112. It follows that the second PRU 108 has a timing reference that is offset by an amount equivalent to the propagation time (indicated RTT2) between itself and the first PRU 106 and similarly the third PRU 110 may have a timing reference that is offset by an amount equivalent to the propagation time (indicated RTT3) between itself and the second PRU 108, and so on for the fourth PRU 112. Timing information, e.g., timestamps, at a given PRU may be estimated or determined based on the relevant timing reference.

The first PRU 106 may communicate with the base station 114 via a first link (uplink) 122 and with the second PRU 108 via a second link (sidelink) 124. The second PRU 108 may communicate with the third PRU 110 via a third link (sidelink) 126 and the third PRU 110 may communicate with the fourth PRU 112 via a fourth link (sidelink) 128.

In response to a positioning request that may be issued, for example by an LMU 116 which forms part of a network associated with the base station 114, the base station 114 may transmit a RTT request to the first PRU 106. The first PRU 106 may responsively signal the request via the second link 124 to the second PRU 108 which is in-range of the vehicle 102. This may cause the second PRU 108 to transmit a first reference signal, e.g. a position reference signal (PRS), to the vehicle 102 at a first reference signal transmit time which, via conventional means, decodes and processes the PRS and transmits at a fixed predetermined time after receiving the reference signal, another, second reference signal, e.g. a sounding reference signal (SRS), which may be received by PRUs in receiving range of the vehicle.

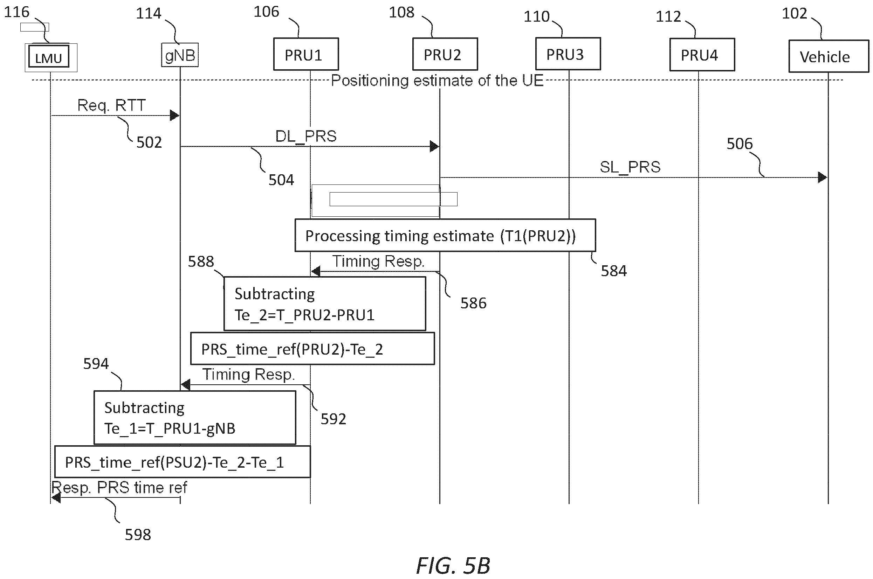

The transmit time of the SRS may be determined, compensated for (for reasons to be explained below) and provided to the LMU 116 in the manner described below with reference to FIG. 5B.

The LMU 116 may therefore be provided with a compensated SRS transmit time in view of the second PRU 108 relaying the PRS or SRS transmit time to the first PRU 106 and then compensated for again to the base station 114 which provides the compensated SRS transmit time to the LMU.

The subsequent determination of position of the vehicle 102 by the LMU 116 may be based on compensated timing information (e.g. compensated receive timestamps of the second reference signal) from three or more of the PRUs and the compensated SRS transmit time, e.g. using time-of-arrival (ToA).

In this case, the second, third and fourth PRUs 108, 110 112 may receive the SRS from the vehicle 102 given their proximity, but in other scenarios the number of PRUs may be greater.

Based on the receive timestamps of the SRS are respectively recorded at each of the second, third and fourth PRUs 108, 110 112and are indicative of their respective ranges from the vehicle 102.

Given the network topology, the fourth PRU 112 may transmit its respective timing information, with identification that it comes from the fourth PRU (PRU4) and the SRS which it is in response to, to the third PRU (PRU3) 110 via the fourth link 128. The third PRU 110 may then relay said timing information to the second PRU (PRU2) 108 via the third link 126 and so on down the series-connected chain of PRUs until the timing information from the fourth PRU is received at the LMU 116 via the base station 114.

The same process may be performed for timing information, e.g. receive timestamp, provided by the third PRU (PRU3) 110 and for timing information, e.g. receive timestamp provided by the second PRU (PRU2) 108.

The LMU 116, upon receipt of the three timing estimates in timing information, e.g. three receive timestamps, from the second, third and fourth PRUs 108, 110, 112 may perform multilateration using the compensated SRS transmit time, the compensated receive timestamps and the known positions of the second, third and fourth PRUs to determine the position of the vehicle 102.

For accurate positioning, the internal clocks of at least the PRUs providing the timing information should be accurate and synchronised; otherwise, timestamps used to determine the timing estimate based on the receive time of the reference signal (e.g. SRS) from the target device will be erroneous and may result in significant positioning errors when processed. Conventionally, synchronisation of internal clocks is performed using a common reference time received from, for example, the GNSS satellite 104 shown in FIG. 1, whether received directly or transmitted by the base station 114. In the FIG. 1 case, the second, third and fourth PRUs 108, 110, 112 cannot "see" the GNSS satellite 104 and may not have a clear line-of-sight to the base station 114. Due to the relaying nature of the network topology, in this case a series chain, the timing reference on which the timing information, or timestamps, are based may not be common and timing errors (or timing offsets) may accumulate as the timing information from, say, the fourth PRU 112 passes to the third PRU 110 and then to the second PRU 108 and so on. Accumulating timing errors lead to accumulating uncertainty in terms of positioning.

Example embodiments provide a way to avoid or at least alleviate such issues to ensure accurate positioning.

Example embodiments are therefore applicable to many scenarios, for example for determining the positions of UEs (e.g. smartphones, robots, machines, vehicles) which operate in environments with no coverage or only partial coverage.

As well as tunnels, such environments may include factories or warehouses where accurate positioning is needed to avoid collisions and ensure correct movement, and shopping malls whereby it may be useful to provide location-based services to users via their smartphones. PRUs interconnected with sidelinks in the manner shown in FIG. 1 (and FIG. 6 below) may be used within such environments, especially if the structure of the environment blocks or attenuate external positioning signals. Other use cases involve the accurate positioning of self-driving vehicles, including trains, which may travel through relatively long underground tunnels. Accurate positioning of vehicles, including cars, in such environments may also be used to avoid collisions and initiate functions such as emergency brake warnings, pre-crash sensing warnings, road hazard warnings, congestion alerts, speed guidance, as well as for self or remote -driving applications.

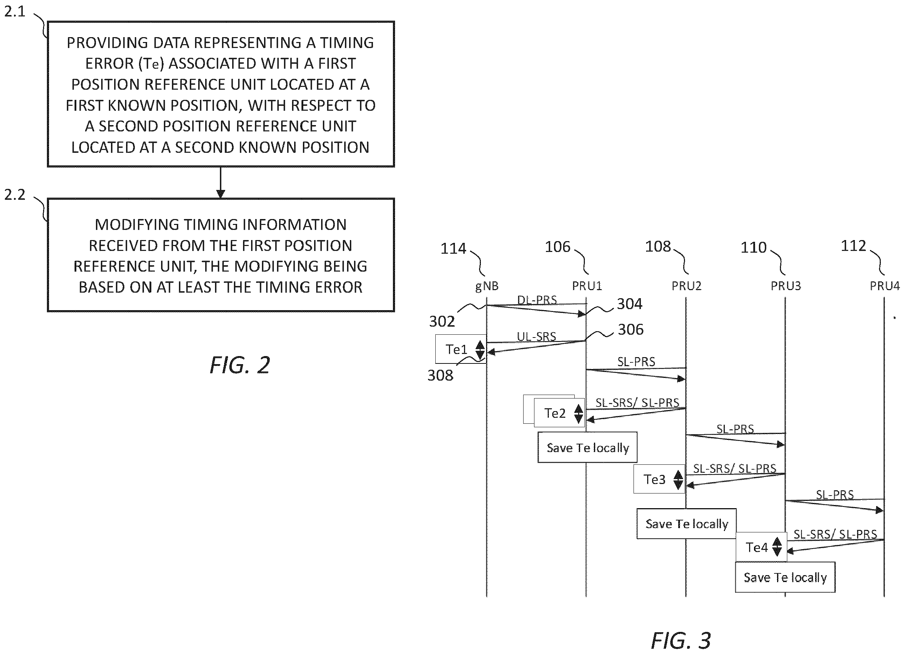

FIG. 2 is a flow diagram showing operations according to one or more example embodiments. The operations may be processing operations performed by hardware, software, firmware or a combination thereof.

A first operation 2.1 may comprise providing data representing a timing error associated with a first PRU located at a first known position, with respect to a second PRU located at a second known position.

The term "providing" may mean receiving, computing, storing or similar.

The timing error may also be termed a timing offset and may be based on the propagation delay between the first reference unit and the second reference unit.

The first to fourth PRUs 106, 108, 110, 112 shown in FIG. 1 are examples of PRUs but example embodiments are not limited to PRUs.

A second operation 2.2 may comprise modifying timing information received from the first PRU, the modifying being based on at least the first timing error.

The timing information received from the first PRU may represent, for example, data indicative of, or usable to determine, a range or distance between the first PRU and a target device, e.g. the vehicle 102 shown in FIG. 1, which is remote from the first PRU.

The timing information may, for example, comprise a receive timestamp of a reference signal transmitted by the target device and received by the first PRU.

The timing information may be received from the first PRU, by or via the second PRU, using one or more sidelinks.

The modifying may comprise subtracting at least the timing error from the timing information, e.g. the receive timestamp, so as to compensate for the timing error.

In example embodiments, the timing error, or $T_e$, may represent a timing error based on the pre-provided propagation delay between the first and second PRUs. Therefore, in some embodiments, where there is a chain of greater than two PRUs, a value of $T_e$ may be provided between each pairwise combination of PRUs. The different timing errors, based on respective propagation delays, may be subtracted iteratively as timing information, e.g. the receive timestamp, is transmitted down the chain, or may be subtracted cumulatively at a position processing node, e.g. an LMU or base station, if the individual timing errors are known or accessible by that position processing node.

Example embodiments may further comprise sending the modified timestamp to a location management unit (LMU) for determining a position of the target device based, in part, on the modified timestamp.

Determining a value of $T_e$ between the first and second PRUs may comprise computing its value by performing a RTT measurement. This may be triggered by the LMU, or similar node, sending a request signal to the target device, but this is not necessarily the case.

For example, with reference to FIG. 3, it is seen that a value of $T_{e1}$, associated with the first PRU 106 with respect to the base station (gNB) 114, may be computed as follows.

First, the base station 114 may initiate a RTT measurement by transmitting a downlink reference signal, e.g. a PRS (DL-PRS) at a time 302 which is received by the first PRU 106 at a time 304.

After some processing time, the first PRU 106 may transmit a responsive uplink reference signal, e.g. an SRS signal (UL-SRS) at a time 306 which is received by the base station 114 at a time 308.

The RTT may be computed by the base station 114 using conventional methods based on the times 302, 304, 306, 308 and the value of $T_{e1}$ may be computed as half, or approximately half of the RTT, as indicated in FIG. 3.

In accordance with some example embodiments, the value of the timing error, e.g. $T_{e1}$, may be stored locally at the relevant downstream node, in this case the base station 114. Storing may use memory of any suitable form. Alternatively, the memory need not be local but is at least accessible by the downstream node, in this case the base station 114. In other example embodiments, the value of $T_{e1}$ may alternatively, or additionally, be provided to another node such as the LMU 116 or similar for making modifications of timing information based on a cumulative timing error depending on how many PRUs are connected in series between the PRU which is providing the timing information and the LMU.

For this purpose, the LMU 116 may also have a suitable storage device for storing the timing error data for each pairwise combination of PRUs / PRUs. Alternatively, the memory need not be local to the LMU 116 but is at least accessible by the LMU.

The values of $T_{e2}$, $T_{e3}$ and $T_{e4}$ may be similarly computed and stored locally as shown; the initiating reference signal, e.g. the PRS signal, is transmitted over the abovementioned sidelinks 124, 126, 128 to the next upstream PRU in the network topology shown in FIG. 1, and hence such signals are referred to in FIG. 3 as SL-PRSs. The responsive reference signal, which can be an SRS or a PRS, is also sent over respective sidelinks to the initiating PRU downstream. The responsive reference signal is referred to in FIG. 3 as an SL-SRS or SL-PRS signal.

Otherwise, the computing process for determining values of $T_{e2}$, $T_{e3}$ and $T_{e4}$ is the same and these values may be stored locally at the respective first, second and third PRUs 106, 108, 110 or, alternatively, can be provided to the other node such as the LMU 116 or similar for cumulative processing, as mentioned above.

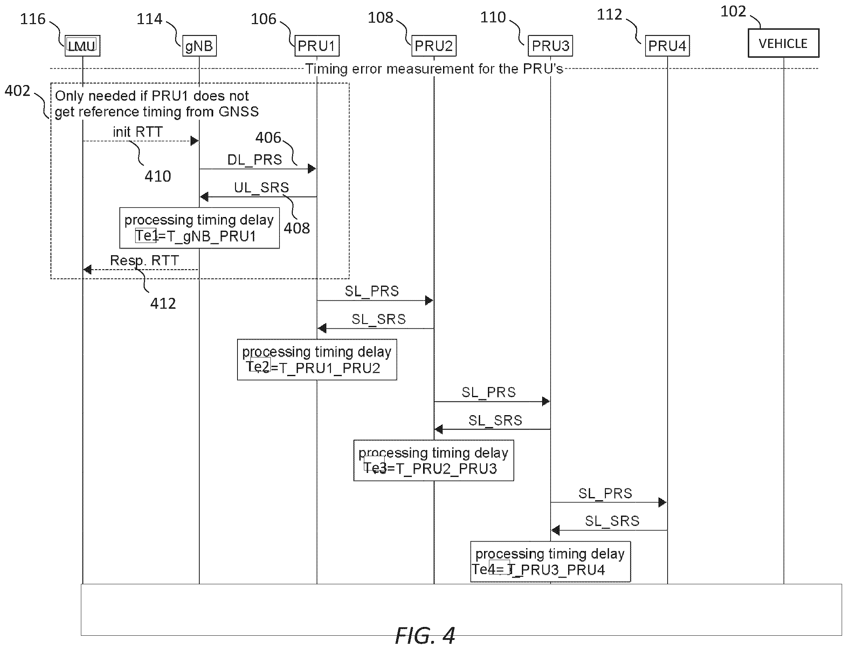

FIG. 4 is a more detailed version of the FIG. 3 signal flow diagram, for explaining how the values of $T_{e1}$, $T_{e2}$, $T_{e3}$ and $T_{e4}$ may be determined in a practical example.

The dashed box 402 indicates that computation of the first timing error $T_{e1}$ may only be needed if the first PRU 106 does not obtain a reference time direct from an accurate and common source such as the GNSS satellite 104 shown in FIG. 1.

If it does not, then a first timing error $T_{e1}$ may be determined based on RTT measurements made by the base station 114 sending a DL-PRS signal 406 to the first PRU 106 which responds, in this case, with an UL-SRS signal 408 back to the base station 114. The first timing error $T_{e1}$ may be denoted T_gNB_PRU1 to indicate that it is associated with the first PRU 106 with respect to the base station 114.

An initiating RTT signal "init RTT" 410 may be sent from the LMU 116 to the base station 114 for triggering the RTT measurement. The first timing error $T_{e1}$ may be stored locally by the base station 114 or is sent to the LMU 116 in a responsive signal "Resp. RTT" 412.

It will be seen that values for second, third and fourth timing errors $T_{e2}$, $T_{e3}$ and $T_{e4}$ may be similarly computed based on PRS and responsive SRS signals sent over respective sidelinks 124, 126, 128.

For completeness, the second timing error $T_{e2}$ may be denoted T_PRU1_PRU2 to indicate that it is associated with the second PRU 108 with respect to the first PRU 106. The third timing error $T_{e3}$ may be denoted T_PRU2_PRU3 to indicate that it is associated with the third PRU 110 with respect to the second PRU 108. The fourth timing error $T_{e4}$ may be denoted T_PRU3_PRU4 to indicate that it is associated with the fourth PRU 112 with respect to the third PRU 110.

The FIG. 4 determinations may be performed in advance of a positioning request initiated by the network, e.g. by the LMU 116. As will be discussed later on, the timing errors may be re-calculated and updated at various times.

In accordance with example embodiments, timing information, e.g. receive timestamps provided by PRUs may be modified based on the timing error values, $T_e$, to compensate for accumulating timing errors between pairwise combinations of PRUs.

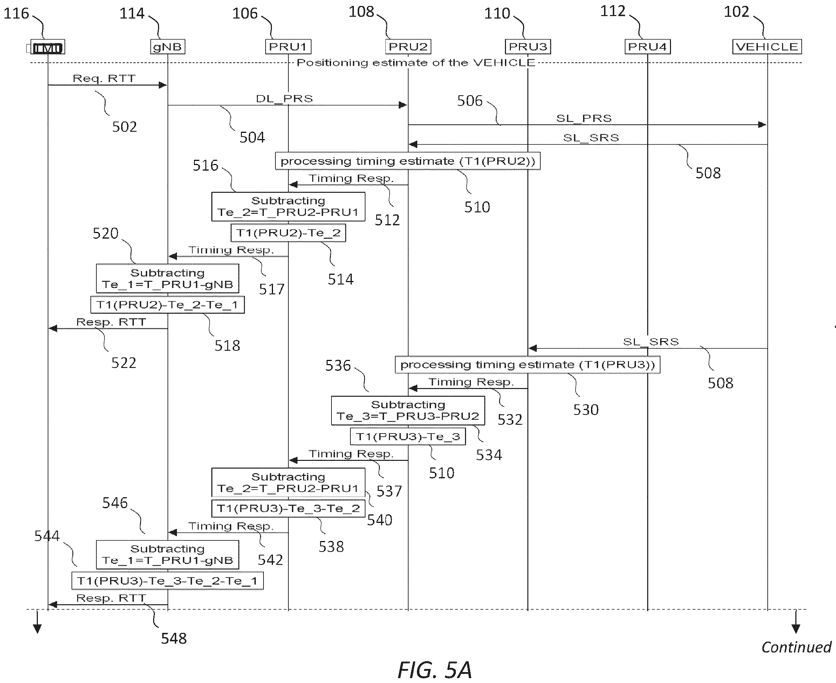

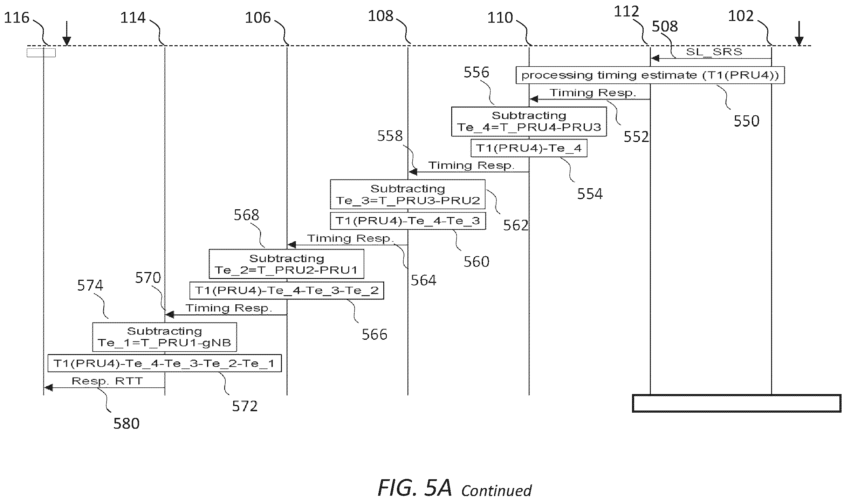

FIG. 5A is a signal flow diagram which is useful for understanding how a positioning request from an initiating node, such as the LMU 116 described above, may be handled using the pre-provided timing errors $T_e$.

FIG. 5A is based on the scenario described with reference to FIGs. 1 - 4, which figures may be useful for reference purposes.

Positioning Request

A signal "Req. RTT" 502 may be transmitted by the LMU 116 to the base station 114 to initiate a positioning request in relation to a target device, which in this case is the vehicle 102 passing through the tunnel 103.

The base station 114 may responsively transmit a downlink PRS signal "DL-PRS" 504 to one of the first to fourth PRUs 106, 108, 110, 112, which may that PRU which is closest to the vehicle 102 based on a prior and/or measured signal strength and/or signal quality data. We may assume the DL-PRS signal 504 is transmitted to the second PRU 108 in this example.

The second PRU 108 may responsively transmit a sidelink PRS signal "SL-PRS" 506 to the vehicle 102 using known methods. The vehicle 102 may responsively transmit, at a time T, a sidelink SRS signal "SL-SRS" 508 which may be received by those PRUs in receiving range of the vehicle.

In this case the second, third and fourth PRUs 108, 110, 112 may receive the sidelink SRS signal "SL-SRS" 508. There may be other PRUs in receiving range which are not considered here.

Processing of the received SL-SRS 508 at each of the second, third and fourth PRUs 108, 110, 112 will now be explained separately.

SL-SRS 508 received at Second PRU 108

At the second PRU 108, processing of a timing estimate is performed in an operation 510 and may comprise determining or estimating a receive timestamp of the SL-SRS signal 508 at the second PRU.

Timing information in a timing response message "T1(PRU2)" 512 may be transmitted by the second PRU 108 to the first PRU 106. The timing response message 512 may comprise the receive timestamp referred to above.

At the first PRU 106, timing information in the received timing response message "T1(PRU2)" 512 may be modified based on the value of the second timing error $T_{e2}$. Specifically, the pre-provided value of $T_{e2}$ may be subtracted from the receive timestamp. Box 516 indicates how $T_{e2}$ was computed, consistent with the explanations above.

The first PRU 106 may then transmit another timing response message "T1(PRU2)" 517 comprising the modified timing information to the base station 114.

At the base station 114, the modified timing information is further modified in an operation 518 based on the value of the first timing error $T_{e1}$. Specifically, the pre-provided value of $T_{e1}$ may be subtracted from the receive timestamp in the timing response message "T1(PRU2)" 517. Box 520 indicates how $T_{e1}$ was computed, consistent with the explanations above.

The base station 114 may then transmit the modified timing information to the LMU 116 in a message termed "Resp. RTT" 522. The timing information T1(PRU2) is its modified form compensates for timing errors occurring in the chain comprising the second PRU 108, the first PRU 106 and the base station 114.

At the third PRU 110, processing of a timing estimate is performed in an operation 530 and may comprise determining or estimating a receive timestamp of the SL-SRS signal 508 at the third PRU.

Timing information in a timing response message "T1(PRU3)" 532 may be transmitted by the third PRU 110 to the second PRU 108. The timing response message 532 may comprise the receive timestamp referred to above.

At the second PRU 108, timing information in the received timing response message "T1(PRU3)" 532 is modified based on the value of the third timing error $T_{e3}$. Specifically, the pre-provided value of $T_{e3}$ may be subtracted from the receive timestamp. Box 536 indicates how $T_{e3}$ was computed, consistent with the explanations above.

The second PRU 108 may then transmit another timing response message "T1(PRU$_3$)" 537 comprising the modified timing information to the first PRU 106.

At the first PRU 106, the modified timing information is further modified in an operation 538 based on the value of the second timing error $T_{e2}$. Specifically, the pre-provided value of $T_{e2}$ may be subtracted from the receive timestamp in the timing response message "T1(PRU3)" 537. Box 540 indicates how $T_{e2}$ was computed, consistent with the explanations above.

The first PRU 106 may then transmit another timing response message "T1(PRU3)" 542 comprising the modified timing information to the base station 114.

At the base station 114, the modified timing information is further modified in an operation 544 based on the value of the first timing error $T_{e1}$. Specifically, the pre-provided value of $T_{e1}$ may be subtracted from the receive timestamp in the timing response message"T1(PRU3)" 542. Box 546 indicates how $T_{e1}$ was computed, consistent with the explanations above.

The base station 114 may then transmit the modified timing information to the LMU 116 in a message termed "Resp. RTT" 548. The timing information T1(PRU3) is its modified form compensates for timing errors occurring in the chain comprising the third PRU 110, the second PRU 108, the first PRU 106 and the base station 114.

At the fourth PRU 112, processing of a timing estimate is performed in an operation 550 and may comprise determining or estimating a receive timestamp of the SL-SRS signal 508 at the fourth PRU.

Timing information in a timing response message "T1(PRU4)" 552 may be transmitted by the fourth PRU 112 to the third PRU 110. The timing response message 552 may comprise the receive timestamp referred to above.

At the third PRU 110, timing information in the received timing response message "T1(PRU4)" 552 is modified based on the value of the third timing error $T_{e4}$. Specifically, the pre-provided value of $T_{e4}$ may be subtracted from the receive timestamp. Box 556 indicates how $T_{e4}$ was computed, consistent with the explanations above.

The third PRU 110 may then transmit another timing response message "T1(PRU$_4$)" 558 comprising the modified timing information to the second PRU 108.

At the second PRU 108, the modified timing information is further modified in an operation 560 based on the value of the third timing error $T_{e3}$. Specifically, the pre-provided value of $T_{e3}$ may be subtracted from the receive timestamp in the timing response message"T1(PRU4)" 558. Box 562 indicates how $T_{e2}$ was computed, consistent with the explanations above.

The second PRU 108 may then transmit another timing response message "T1(PRU4)" 564 comprising the modified timing information to the first PRU 106.

At the first PRU 106, the modified timing information is further modified in an operation 566 based on the value of the second timing error $T_{e2}$. Specifically, the pre-provided value of $T_{e2}$ may be subtracted from the receive timestamp in the timing response message"T1(PRU4)" 564. Box 568 indicates how $T_{e2}$ was computed, consistent with the explanations above.

The first PRU 106 may then transmit another timing response message "T1(PRU4)" 570 comprising the modified timing information to the base station 114.

At the base station 114, the modified timing information is further modified in an operation 572 based on the value of the first timing error $T_{e1}$. Specifically, the pre-provided value of $T_{e1}$ may be subtracted from the receive timestamp in the timing response message"T1(PRU4)" 570. Box 574 indicates how $T_{e1}$ was computed, consistent with the explanations above.

The base station 114 may then transmit the modified timing information to the LMU 116 in a message termed "Resp. RTT" 580. The timing information T1(PRU4) is its modified form compensates for timing errors occurring in the chain comprising the fourth PRU 112, the third PRU 110, the second PRU 108, the first PRU 106 and the base station 114.

FIG. 5B is a signal flow diagram which is useful for understanding how compensation of the SRS signal from the vehicle 102 is performed. Operations 502, 504, 506 are as described above. A subsequent operation 584 may involve processing of a timing estimate (T1(PRU2)) which determines or estimates the transmit timestamp of the SL-PRS signal 506. The transmit timestamp of the SRS signal will occur at a known offset from this time, which can be calculated locally or at the PRU 106. This is signalled back to the first PRU 106 in a PRS timing response operation 586. At the first PRU 106, in an operation 590, the second timing error $T_{e2}$ is subtracted from the transmit timestamp of the SL-PRS signal 506 and the modified transmit timestamp sent to the base station 114 in a timing response operation 592. The process is repeated at the base station 114 where the first timing error $T_{e2}$ is subtracted from the modified timestamp in an operation 594 and provided to the LMU 116 in an operation 598. Here, if not already done, the SRS transmit timestamp can be determined using the known offset.

### LMU 116

Whether at the first PRU 106 or the base station 114, the (at least) three sets of compensated timing information, e.g. compensated receive timestamps, are provided to the LMU 116 which is therefore provided with information which represents (at least) three ranges with respect to the compensated SRS transmit time.

Receipt by the LMU 116 of the three sets of compensated timing information, e.g. compensated receive timestamps, enables it to compute the position of the vehicle 102. This is irrespective of the route taken for transferring the receive timestamps. The LMU 116 therefore does not need to know about the arrangement of, or routing from the second, third and fourth PRUs 108, 110, 112 to the first PRU 106 or the base station 114 because the timestamps are compensated as they are routed.

Example embodiments which employ the above-described iterative method, whereby compensation occurs at each node in the PRU chain, is advantageous in that it adds only a minor additional load over the air interface of individual nodes and may be implemented without changing existing standards.

The iterative method may also cater for dynamic changes, e.g. when the topology of PRUs used for positioning is not fixed. It offers high flexibility because the timing errors are compensated locally and requires no changes to a backbone part of the network or the LMU 116.

For example, FIG. 6 shows a different scenario 600 to that of FIG. 1. Like elements between FIGs. 1 and 6 use the same reference numerals, but it will be noted that there are additional PRUs, namely fifth to seventh PRUs 602, 604, 606.

At one time instance, the topology of used / connected nodes may comprise the base station 114 - first PRU 106 - second PRU 108 - third PRU 110. At another time instance, the topology of used / connected nodes may switch to the base station 114 - first PRU 106 - fifth PRU 602 - third PRU 110. The use of the fifth PRU 602 instead of the second PRU 108 may be because the former is determined to offer better signal strength or quality over the latter with respect to the vehicle 102. This switching will not affect the methodology described herein; a value of timing error for the fifth PRU 602 with respect to the first PRU 106 may be stored at the first PRU and a value of timing error for the third PRU 110 may be stored at the fifth PRU for this purpose. The method is otherwise the same.

As an alternative to the iterative method, the various pre-computed values of timing error may be stored centrally, e.g. by the LMU 116 or the base station 114. The LMU 116 or the base station 114, with knowledge of which PRUs are being used in which topology (i.e. the chain), may compute a cumulative value $T_{eTotal}$ of the timing errors based on:

$$T_{eTotal}(n) = \sum_{i=1}^{n} Te\_RSU(i) \qquad (1)$$

wherein n is the number of PRUs in the chain, including the PRU for which the timing information is being received, and $Te\_RSU(i)$ is the pre-computed timing error for each PRU in the chain. As the topology changes, e.g. as described with reference to FIG. 6, the LMU 116 or base station 114 may need to be informed via signalling and this may also involve triggering timing error updates.

Re-Calculating Timing Errors

The values of the timing errors $T_e$ are generally not static parameters. They may depend on the accuracy of individual PRUs which may depend on temperature, software algorithms used, tolerances, and so on. It may therefore be important to re-measure timing errors $T_e$, for example based on the FIG. 3 and FIG. 4 methodologies, at particular times.

For example, re-computing and updating of the timing errors $T_e$ may be performed (for one or more relevant PRU) at predetermined time intervals. The predetermined time intervals may be fixed periodic time intervals, e.g. each second.

Additionally, or alternatively, re-computing and updating the timing errors $T_e$ may be performed responsive to receipt of a positioning request, e.g. from an LMU or base station, for locating a target device. This may be considered an "on demand" re-compute.

Additionally, or alternatively, calculating timing errors $T_e$ may be self-triggered by an individual node in the event of some measurable parameter (local or global) exceeding a predetermined limit.

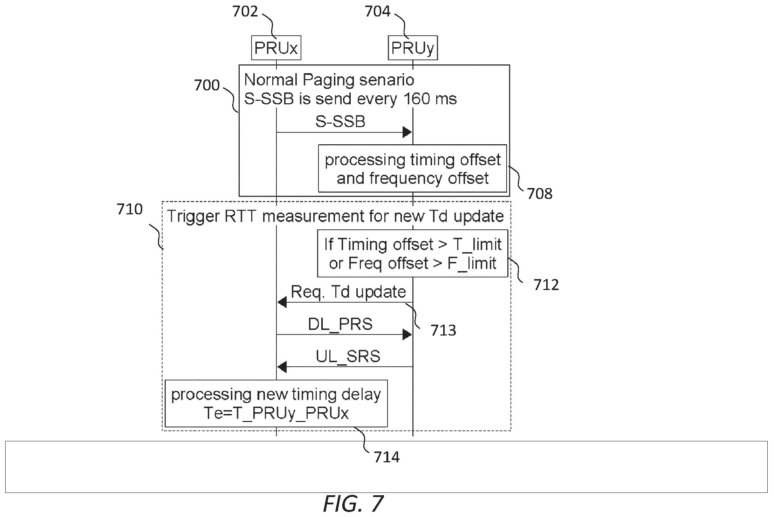

With reference to FIG. 7, for example, in a first stage 700 an individual first node, e.g. PRUx 702 may periodically page a second node, e.g. PRUy 704 which is higher up the chain, by transmitting a synchronisation signal, e.g. an S-SSB signal, which may be transmitted every 160 ms, assuming the two nodes are connected by a sidelink. The second node PRUy 704 may responsively process and compute a timing and/or frequency offset. The timing offset may be computed based on a difference between a measured timing error Te between PRUx 702 and PRUy 704 and an ideal timing error Te_ideal which is known, based on the known distance between PRUx and PRUy, i.e. Te - Te_ideal. The frequency offset may therefore be computed from the timing offset.

In a second stage 710, in the event that a computed timing or frequency offset at the second node PRUy 704 exceeds a predetermined threshold, e.g. T_limit or F_limit, a triggering signal 713 may be returned by the second node to the first node PRUx 702 for the first node to request a time delay (Td) update and re-compute 714 and update the timing error $T_e$ associated with the second node using the above-described RTT method.

The self-triggering option provides greater flexibility with less measurement overhead, ensures that all of the PRUs are synchronised with one another, which may account for any drift in PRU clocks, e.g. due to temperature changes, software algorithms, and so on, and requires no changes to the LMU 116 or base station 114. Synchronisation is handled locally with no need for cables from each PRU to, for example, the LMU 116.

Example embodiments therefore provide a way to compensate for timing errors that may occur within a network of PRUs, including sidelink-connected PRUs, even though at least some of the PRUs have no coverage or limited coverage to an accurate reference time for synchronisation purposes. This may be useful in various scenarios, some of which are outlined above, and in particular where a network of UE-type PRUs provides positioning functionality in environments such as tunnels, factories, shopping malls, given by way of example only.

Example Apparatus

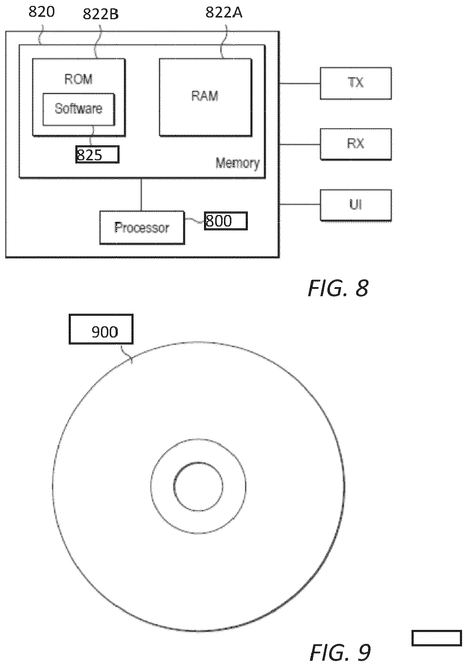

FIG. 8 shows an example apparatus. The apparatus may, for example, comprise a PRU or LMU shown in FIG. 1 or FIG. 6.

The apparatus may comprise at least one processor 800 and at least one memory 820 directly or closely connected or coupled to the processor. The memory 820 may comprise at least one random access memory (RAM) 822A and at least one read-only memory (ROM) 822B. Computer program code (software) 825 may be stored in the ROM 822B. The apparatus may be connected to a transmitter path and a receiver path in order to obtain respective signals or data. The apparatus may be connected with a user interface (UI) for instructing the apparatus and/or for outputting data. The at least one processor 800 with the at least one memory 820 and the computer program code 825 may be arranged to cause the apparatus to at least perform methods described herein, such as those described with reference to FIG. 2.

The processor 800 may be a microprocessor, plural microprocessors, a microcontroller, or plural microcontrollers.

The memory 820 may take any suitable form.

FIG. 9 shows a non-transitory media 900 according to some embodiments. The non-transitory media 900 is a computer readable storage medium. It may be e.g. a CD, a DVD, a USB stick, a blue ray disk, etc. The non-transitory media 900 stores computer program code causing an apparatus to perform operations described above when executed by a processor such as processor 600 of FIG. 2.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

## Claims

1. An apparatus, comprising:

   means for providing data representing a timing error associated with a first position reference unit located at a first known position, with respect to a second position reference unit located at a second known position, the timing error being based on a propagation delay between the first reference unit and the second reference unit; and
   means for modifying a receive timestamp of a reference signal received from the first position reference unit by subtracting at least the timing error from the receive timestamp,
   wherein the reference signal is transmitted to at least the first position reference unit by a target device and wherein the receive timestamp is the time at which the reference signal is received by the first position reference unit.

2. The apparatus of claim 1, wherein the receive timestamp is received from the first position reference unit, by or via the second position reference unit, using one or more sidelinks.

3. The apparatus of claim 1 or claim 2, wherein the receive timestamp is indicative of, or usable to determine, a range between the first position reference unit and a target device remote from the first and second position reference units.

4. The apparatus of claim 3, wherein the reference signal is a sounding reference signal (SRS) or positioning reference signal (PRS).

5. The apparatus of claim 3 or claim 4, wherein the receive timestamp is received from the first position reference unit in response to a positioning request signal (PRS) transmitted to the target device.

6. The apparatus of any preceding claim, wherein the providing means is configured to compute a round-trip-time (RTT) between transmitting a paging signal from the second position reference unit to the first position reference unit and receiving an acknowledgment signal at the second position reference unit from the first position reference unit, the timing error being based on the RTT, wherein, optionally, the timing error is approximately half of the computed RTT.

7. The apparatus of any preceding claim, further comprising means for re-computing and updating the timing error at predetermined time intervals and/or responsive to receipt of a positioning request from a location management unit for locating a target device.

8. The apparatus of any preceding claim, further comprising means for paging, by the second position reference unit, the first position reference unit using a synchronisation signal, receiving therefrom a triggering signal in the event that a computed timing or frequency offset exceeds a predetermined threshold, and for re-computing and updating the timing error responsive to receiving the triggering signal.

9. The apparatus of any preceding claim, wherein the apparatus comprises the second position reference unit.

10. The apparatus of claim 9, wherein the apparatus further comprises means for sending the modified timestamp to a location management unit for determining a position of the target device based, in part, on the modified timestamp.

11. The apparatus of claim 9 or claim 10, further comprising means for storing the timing error locally at the second position reference unit.

12. An apparatus according to any of claims 1 to 8, further comprising means for:

identifying a chain of position reference units connected in series, the chain comprising the first position reference unit connected in series to the second position reference unit and the second position reference unit connected in series to a third position reference unit; and
computing a cumulative timing error based on the timing error associated with the first position reference unit with respect to the second position reference unit, and a timing error associated with the second position reference unit with respect to the third position reference unit,
wherein the modifying means is configured to modify the receive timestamp of the reference signal received from the first position reference unit based on the cumulative timing error.

13. The apparatus of claim 12, wherein the apparatus comprises a location management unit or a base station connected to the location management unit.

14. The apparatus of any preceding claim, wherein the first position reference unit and the second position reference unit have different respective timing references for estimating or determining timestamps, the difference between the reference times being based on the propagation delay between the first reference unit and the second reference unit.

15. A method, the method comprising:

providing data representing a timing error associated with a first position reference unit located at a first known position, with respect to a second position reference unit located at a second known position, the timing error being based on a propagation delay between the first reference unit and the second reference unit; and
modifying a receive timestamp of a reference signal received from the first position reference unit, the modifying being based on at least the first timing error by subtracting at least the timing error from the receive timestamp, wherein the reference signal is transmitted to at least the first position reference unit by a target device and wherein the receive timestamp is the time at which the reference signal is received by the first position reference unit.

*FIG. 1*

EP 4 239 360 A1

FIG. 3

2.1 — PROVIDING DATA REPRESENTING A TIMING ERROR (Te) ASSOCIATED WITH A FIRST POSITION REFERENCE UNIT LOCATED AT A FIRST KNOWN POSITION, WITH RESPECT TO A SECOND POSITION REFERENCE UNIT LOCATED AT A SECOND KNOWN POSITION

2.2 — MODIFYING TIMING INFORMATION RECEIVED FROM THE FIRST POSITION REFERENCE UNIT, THE MODIFYING BEING BASED ON AT LEAST THE TIMING ERROR

FIG. 2

FIG. 4

FIG. 5A

FIG. 5A *Continued*

FIG. 5B

EP 4 239 360 A1

*FIG. 6*

FIG. 7

FIG. 8

FIG. 9

# EP 4 239 360 A1

Europäisches
Patentamt
European
Patent Office
Office européen
des brevets

## EUROPEAN SEARCH REPORT

Application Number

EP 23 15 9278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/149198 A1 (NAM HONG-SOON [KR] ET AL) 11 June 2009 (2009-06-11)<br>* paragraph [0009] - paragraph [0019] *<br>* paragraph [0035] - paragraph [0064] *<br>* abstract *<br>* figures 1-6 * | 1-15 | INV.<br>G01S5/00<br>G01S5/02<br>G01S5/14 |
| X | US 2020/229126 A1 (SORIAGA JOSEPH BINAMIRA [US] ET AL) 16 July 2020 (2020-07-16)<br>* paragraph [0007] - paragraph [0008] *<br>* paragraph [0113] - paragraph [0119] *<br>* paragraph [0131] - paragraph [0137] *<br>* paragraph [0160] - paragraph [0161] *<br>* figures 7-8 *<br>* figure 10 *<br>* figures 14-15 * | 1-15 | |
| A | US 2020/374656 A1 (ALAWIEH MOHAMMAD [DE] ET AL) 26 November 2020 (2020-11-26)<br>* the whole document * | 1-15 | |

TECHNICAL FIELDS
SEARCHED (IPC)

G01S

The present search report has been drawn up for all claims

| Place of search | Date of completion of the search | Examiner |
|---|---|---|
| Munich | 28 June 2023 | Galmiche, Aurélien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 9278**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-06-2023**

| Patent document cited in search report | | Publication date | Patent family member(s) | | Publication date |
|---|---|---|---|---|---|
| US 2009149198 | A1 | 11-06-2009 | KR 20090060914 | A | 15-06-2009 |
| | | | US 2009149198 | A1 | 11-06-2009 |
| US 2020229126 | A1 | 16-07-2020 | CN 113272674 | A | 17-08-2021 |
| | | | EP 3908847 | A1 | 17-11-2021 |
| | | | KR 20210113195 | A | 15-09-2021 |
| | | | US 2020229126 | A1 | 16-07-2020 |
| | | | WO 2020146838 | A1 | 16-07-2020 |
| US 2020374656 | A1 | 26-11-2020 | CN 111989964 | A | 24-11-2020 |
| | | | EP 3756387 | A1 | 30-12-2020 |
| | | | ES 2936130 | T3 | 14-03-2023 |
| | | | US 2020374656 | A1 | 26-11-2020 |
| | | | WO 2019158223 | A1 | 22-08-2019 |

EPO FORM P0459

For more details about this annex : see Official Journal of the European Patent Office, No. 12/82